# EUROPÄISCHE PATENTSCHRIFT

(11) **EP 3 350 444 B1**
(45) Veröffentlichungstag und Bekanntmachung des Hinweises auf die Patenterteilung: **30.10.2019**
(21) Anmeldenummer: 16765993.7
(22) Anmeldetag: 15.09.2016
(51) Int. Cl.: F04C 2/10, F04C 2/344, F04C 15/06, G01F 3/10, G01F 15/02

(54) **ZWEISEITIG ANSTRÖMBARE VORRICHTUNG ZUR MESSUNG VON DURCHFLUSSVORGÄNGEN VON FLUIDEN**
BIDIRECTIONALLY FLOW-IMPINGED DEVICE FOR MEASURING FLOW PROCESSES OF FLUIDS
DISPOSITIF D'ÉCOULEMENT FLUIDIQUE BIDIRECTIONNEL DESTINÉ À MESURER DES PROCESSUS D'ÉCOULEMENT DE FLUIDES

(30) Priorität: 15.09.2015 AT 6022015
(43) Veröffentlichungstag der Anmeldung: 25.07.2018
(73) Patentinhaber: AVL List GmbH, 8020 Graz (AT)
(72) Erfinder: DERSCHMIDT, Otfried, 8020 Graz (AT); KAMMERSTETTER, Heribert, 5020 Salzburg (AT)
(74) Vertreter: Patentanwälte ter Smitten Eberlein-Van Hoof Rütten Partnerschaftsgesellschaft mbB
(86) Internationale Anmeldenummer: PCT/EP2016/071769
(87) Internationale Veröffentlichungsnummer: WO 2017/046209

(56) Entgegenhaltungen:
- WO-A1-2014/118045
- AT-B1- 512 619
- US-A- 3 273 502

## Beschreibung

Die Erfindung betrifft eine Vorrichtung zur Messung von Durchflussvorgängen von Fluiden, einem Einlass, einem Auslass, einem antreibbaren Verdrängerzähler, der in einem Gehäuse angeordnet ist, in dem eine Verdrängerkammer ausgebildet ist, in der zumindest ein angetriebenes Verdrängerrad drehbar angeordnet ist, wobei die Verdrängerkammer über einen ersten Zulaufkanal mit dem Einlass und über einen ersten Ablaufkanal mit dem Auslass fluidisch verbunden ist, einer Umgehungsleitung, über die der Verdrängerzähler umgehbar ist, einem Druckdifferenzaufnehmer, der in der Umgehungsleitung angeordnet ist und einer Auswerte- und Steuereinheit, über die der antreibbare Verdrängerzähler in Abhängigkeit der am Druckdifferenzaufnehmer anliegenden Druckdifferenz regelbar ist.

Derartige Vorrichtungen sind seit vielen Jahren bekannt und werden beispielsweise zur Einspritzmengenmessung bei Verbrennungsmotoren verwendet.

Die ursprüngliche Version einer derartigen Vorrichtung zur Durchflussmessung wurde in der DE-AS 1 798 080 beschrieben. Dieses elektronisch gesteuerte Durchflussmessgerät weist eine Hauptleitung mit einem Einlass und einem Auslass auf, in der ein rotatorischer Verdränger in Form einer Zahnradpumpe angeordnet ist. Parallel zur Hauptleitung verläuft eine Umgehungsleitung, über die der rotatorische Verdränger umgehbar ist und in der ein als Druckdifferenzaufnehmer dienender Kolben in einer Messkammer angeordnet ist. Zur Bestimmung der Durchflussmenge wird die Auslenkung des Kolbens in der Messkammer mittels eines optischen Sensors gemessen. Die Drehzahl der Zahnradpumpe wird aufgrund dieses Signals über eine Auswerte- und Steuereinheit stetig nachgeregelt, und zwar derart, dass der Kolben möglichst immer in seine Ausgangsposition zurückgeführt wird, so dass in der Umgehungsleitung lediglich kleine Strömungen entstehen. Aus der über einen Kodierer gemessenen Anzahl der Umdrehungen oder Teilumdrehungen der Zahnradpumpe sowie dem bekannten Fördervolumen der Zahnradpumpe bei einer Umdrehung wird so der Durchfluss innerhalb eines vorgegebenen Zeitintervalls berechnet.

Ein derartig aufgebautes Durchflussmengenmessgerät wird auch in der DE 103 31 228 B3 offenbart. Zur Bestimmung der genauen Einspritzmengenverläufe wird die Zahnradpumpe vor Beginn jeder Einspritzung jeweils auf eine konstante Drehzahl eingestellt, so dass anschließend die Bewegung des Kolbens gemessen wird und diese Auslenkung zur Bestimmung der Einspritzverläufe genutzt wird. In der Messkammer sind zusätzlich ein Drucksensor sowie ein Temperatursensor angeordnet, deren Messwerte zur Berechnung und Korrektur der Einspritzmengenverläufe ebenfalls der Recheneinheit zugeführt werden.

Des Weiteren ist es bekannt, die Auslenkung des Kolbens nicht über einen optischen, sondern über einen magnetoresistiven Sensor zu messen, der mit einem im Kolben angeordneten Permanentmagneten korrespondiert. Ein derartiges Durchflussmessgerät wird in der AT 512619 B1 beschrieben.

Bei all diesen Durchflussmengenmessgeräten werden Zahnradpumpen mit zwei miteinander kämmenden, nebeneinander angeordneten Zahnrädern verwendet, die in einer Pumpenkammer angeordnet sind, die über eine Einlassöffnung mit Fluid versorgt wird, welches über eine Auslassöffnung die Pumpenkammer wieder verlässt. Zur exakten Bestimmung der geförderten Menge, wie dies bei der Verwendung in Durchflussmessgeräten notwendig ist, ist es jedoch erforderlich, jeder Umdrehung der Zahnräder einen exakten geförderten Volumenstrom zuordnen zu können. Durch auftretende Kavitation im eingangsseitigen Bereich sowie lokale Druckspitzen im Bereich der Zähne im auslassseitigen Bereich und dem daraus resultierenden Verschleiß kann es bei längerem Betrieb daher zu Messfehlern kommen.

Es stellt sich somit die Aufgabe, eine Vorrichtung zur Messung von Durchflussvorgängen von Fluiden zur Verfügung zu stellen, mit der die Durchflussverläufe über eine lange Lebensdauer gleichbleibend exakt bestimmt werden können. Insbesondere soll eine Kavitation an den Verdrängerrädern und ein daraus folgender Verschleiß verringert werden.

Diese Aufgabe wird durch eine Vorrichtung zur Messung von Durchflussvorgängen eines Fluides mit den Merkmalen des Anspruchs 1 gelöst.

Dadurch, dass der erste Zulaufkanal über eine erste Einlassöffnung stirnseitig in die Verdrängerkammer mündet und ein zweiter mit dem Einlass fluidisch verbundener Zulaufkanal über eine zweite Einlassöffnung rückseitig in die Verdrängerkammer mündet, kann der auftretende Verschleiß im Bereich des Verdrängerrades, der der Einlassöffnung gegenüberliegt, deutlich reduziert werden, da eine deutlich gleichmäßigere Belastung des Verdrängerrades über seine axiale Ausdehnung hinweg erreicht wird. Die Befüllung der Verdrängerkammer erfolgt entsprechend von beiden axialen Seiten, wodurch die Anzahl und Intensität der auftretenden Druckstöße an der gleichen festen Oberfläche des Verdrängers verringert werden.

Vorzugsweise mündet der erste Ablaufkanal stirnseitig über eine erste Auslassöffnung in die Verdrängerkammer und ein zweiter Ablaufkanal mündet rückseitig über eine zweite Auslassöffnung in die Verdrängerkammer. Entsprechend wird auch an der Druckseite des Verdrängerzählers, an der aufgrund des höheren Förderdruckes eine höhere Belastung vorliegt, eine einseitige Belastung des Verdrängerrades durch die Kavitation verhindert und entsprechend einem fortschreitenden Kavitationsfraß durch axial einseitige Belastung entgegengewirkt.

In einer besonders vorteilhaften Ausführungsform ist das Gehäuse zweiteilig ausgeführt, wobei im ersten Gehäuseteil die Verdrängerkammer angeordnet ist, welche durch ein zweites Gehäuseteil verschlossen ist, in dem die stirnseitige Einlassöffnung und/oder Auslassöffnung angeordnet ist und in dem eine Messkammer des Druckdifferenzaufnehmers angeordnet ist. Eine derartige Trennung der Gehäuseteile vereinfacht die Montage und ermöglicht eine gute Zugänglichkeit. Die notwendigen Dichtebenen werden auf ein Minimum reduziert, da die Verbindung zwischen der Messkammer und dem Verdrängerraum durch im zweiten Gehäuseteil ausgebildete Kanäle erfolgen kann, wodurch zusätzliche Leitungen entfallen.

In einer bevorzugten Weiterbildung der Erfindung sind die Einlassöffnungen und/oder die Auslassöffnungen an der Stirnseite und an der Rückseite des die Verdrängerkammer begrenzenden Gehäuses nierenförmig ausgebildet, wodurch eine gleichmäßige Befüllung der Pumpenkammer bei deutlicher Minderung der auftretenden Druckstöße erreicht wird.

In einer hierzu weiterführenden vorteilhaften Ausbildung ist der Verdrängerzähler als Zahnradpumpe ausgebildet und die nierenförmigen Einlassöffnungen und/oder Auslassöffnungen erstrecken sich radial nach außen bis zu den Zahngründen des Verdrängerrades, wodurch Druckstöße und daraus resultierende Kavitation zusätzlich verringert werden und die Füllung der Verdrängerkammer verbessert wird.

Weitere Vorteile ergeben sich, wenn die Einlassöffnung und/oder die Auslassöffnung an der Stirnseite der Verdrängerkammer spiegelbildlich zur Einlassöffnung und/oder zur Auslassöffnung auf der Rückseite der Verdrängerkammer ausgebildet ist. Eine Änderung der Zuflussrichtung oder der Anteile, welche über die erste oder die zweite Einlass- oder Auslassöffnung einfließen oder ausfließen, hat so keinen Einfluss auf die Einlauf- oder Auslaufgeometrien der Strömungen, wodurch ein Verschleiß durch ungleichförmige Belastung der Front- oder Rückseite vermieden wird.

Eine besonders einfache Zuleitung ohne weitere Anschlüsse ergibt sich, wenn der erste Zulaufkanal und der zweite Zulaufkanal und/oder der erste Ablaufkanal und der zweite Ablaufkanal über im Gehäuse angeordnete Verbindungskanäle fluidisch miteinander verbunden sind und beide Zulaufkanäle und/oder beide Ablaufkanäle fluidisch mit dem gemeinsamen am Gehäuse ausgebildeten Einlass und/oder Auslass verbunden sind. Die Anzahl äußerer Leitungen bleibt hierdurch auf ein notwendiges Minimum beschränkt, wodurch die Montage vereinfacht wird.

Vorteilhafterweise sind die Einlassöffnungen und/oder die Auslassöffnungen in die Verdrängerkammer an stirnseitig und rückseitig begrenzenden Wänden eingefräst. Diese Wände sind einfach zugänglich, so dass eine kostengünstige Herstellung der Öffnungen durch Fräsen möglich ist.

In einer besonders bevorzugten Ausbildung der Erfindung ist im ersten Gehäuseteil eine Buchse angeordnet ist, die die Verdrängerkammer bildet und die in eine entsprechende Aufnahmeöffnung des ersten Gehäuseteils eingesetzt ist. Dies vereinfacht die Herstellung der notwendigen Verbindungskanäle sowie der rückseitig ausgebildeten Einlass- und Auslassöffnung. Zusätzlich besteht die Möglichkeit des Austauschs der Buchse im Schadensfall, ohne dass das komplette erste Gehäuseteil ausgetauscht werden müsste. Des Weiteren können für die relativ kleine Buchse wertvollere Materialien mit verbesserten Gleiteigenschaften verwendet werden, ohne dass dies zu einer signifikanten Erhöhung der Herstellkosten führt. Auch kann die Festigkeit durch Verwendung entsprechender Materialien erhöht werden.

Eine besonders einfache Herstellung ergibt sich, wenn die Buchse die die Verdrängerkammer rückseitig begrenzende Wand aufweist, in der die zweite Einlassöffnung und/oder die zweite Auslassöffnung ausgebildet sind, da eine entsprechende Bearbeitung der Buchse aufgrund der guten Erreichbarkeit aller Oberflächen mit deutlich weniger Aufwand durchgeführt werden kann.

In einer hierzu weiterführenden Ausführungsform sind der zweite Zulaufkanal und der zweite Ablaufkanal zumindest teilweise in der die Verdrängerkammer rückseitig begrenzenden Wand und an der radial begrenzenden Außenwand der Buchse ausgebildet. Diese Kanäle können durch einfach auszubildende Bohrungen in den Wänden hergestellt werden. Im Vergleich zu einer Ausbildung der Kanäle im ersten Gehäuseteil ist das Verschließen durch zusätzliche Stopfen oder dergleichen nicht erforderlich. Stattdessen kann eine Abdichtung dieser Kanäle durch einfache Zwischenlage eines Axialdichtringes zwischen den Gehäuseteile und der Buchse erfolgen, wodurch die Montage deutlich vereinfacht wird.

Eine besonders vorteilhafte Weiterbildung der Erfindung ergibt sich dadurch, dass an der radialen Außenseite der radial begrenzenden Außenwand der Buchse Nuten ausgebildet sind, die einen Abschnitt des zweiten Zulaufkanals und des zweiten Ablaufkanals bilden, welche nach radial außen durch das erste Gehäuseteil verschlossen sind. Diese Nuten können eingefräst werden und bilden eine besonders einfache fluidische Verbindung zwischen der Stirnseite und der Rückseite der Verdrängerkammer zur beidseitigen Versorgung dieser Kammer mit Fluid.

Es wird somit eine Vorrichtung zur Messung von Durchflussvorgängen von Fluiden zur Verfügung gestellt, mit der die auftretende Kavitation und der aus der Kavitation folgende Verschleiß aufgrund der hohen auftretenden Druckbelastungen an den Verdrängerrädern deutlich reduziert werden können. Dies führt zu einer längeren Lebensdauer der Vorrichtung und vor allem zu Messergebnissen, die über die gesamte Lebensdauer sehr exakt sind, so dass über einen langen Zeitraum auch zeitlich aufgelöste Durchflussvorgänge hochgenau gemessen werden können. Dabei ist die Vorrichtung einfach herstellbar und montierbar, so dass trotz der Erhöhung der Lebensdauer keine signifikanten zusätzlichen Kosten anfallen.

Die erfindungsgemäße Vorrichtung zur Messung von Durchflussvorgängen von Fluiden wird im Folgenden anhand eines in den Figuren dargestellten, nicht einschränkenden Ausführungsbeispiels beschrieben.
Figur 1 zeigt eine perspektivische Außenansicht der erfindungsgemäßen Vorrichtung.
Figur 2 zeigt eine perspektivische Ansicht auf das eine Stirnseite der Verdrängerkammer bildende Gehäuseteil der erfindungsgemäßen Vorrichtung aus Figur 1.
Figur 3 zeigt eine perspektivische Ansicht auf das die Verdrängerkammer bildende beziehungsweise aufnehmende Gehäuseteil der erfindungsgemäßen Vorrichtung aus Figur 1.
Figur 4 zeigt die Ansicht gemäß der Figur 3 mit Verdrängerzähler.

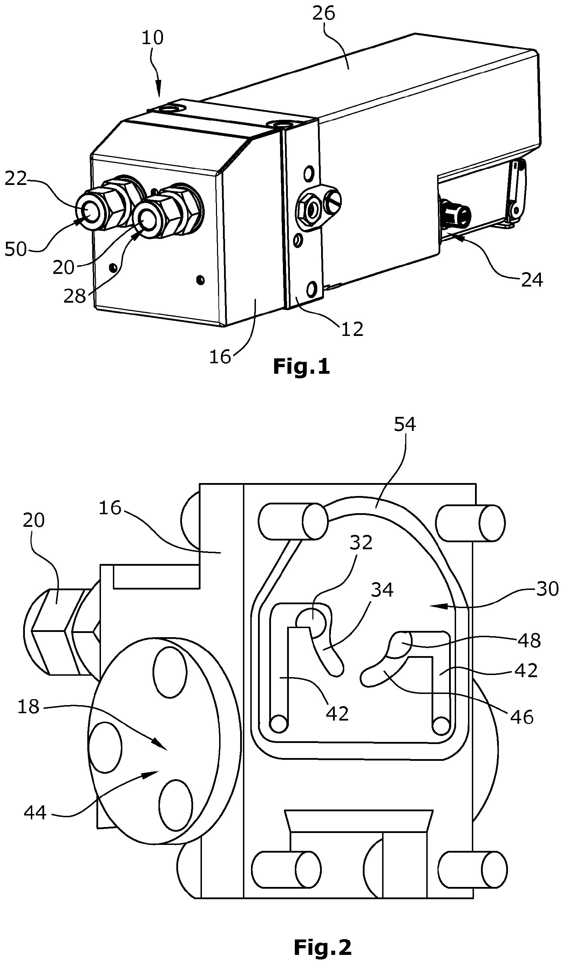

In der Figur 1 ist die Außenansicht einer erfindungsgemäßen Vorrichtung zur Messung von zeitlich aufgelösten Durchflussvorgängen dargestellt. Die erfindungsgemäße Vorrichtung weist ein Gehäuse 10 auf, welches zweiteilig hergestellt ist, wobei im ersten Gehäuseteil 12 ein Verdrängerzähler 14 angeordnet ist und im zweiten Gehäuseteil 16 ein Druckdifferenzaufnehmer 18, sowie ein Einlass 20 und ein Auslass 22 ausgebildet sind. Ein Antriebsmotor des Verdrängerzählers 14 sowie die Auswerte- und Steuereinheit 24 sind innerhalb einer Haube 26 angeordnet, die ebenso wie das zweite Gehäuseteil 16 am ersten Gehäuseteil 12 befestigt ist.

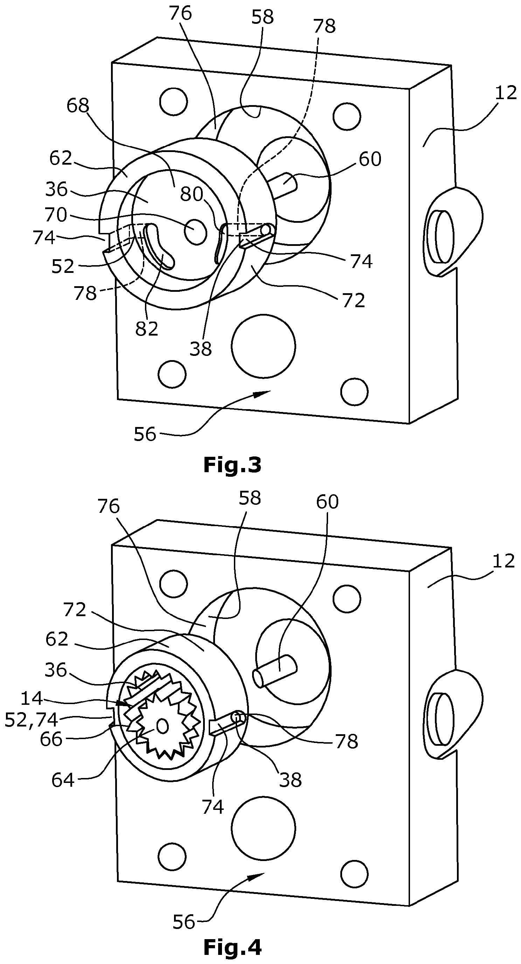

In Figur 2 ist das zweite Gehäuseteil 16 dargestellt. Über den Einlass 20 strömt der Kraftstoff in einen ersten als Zulauf dienenden Verbindungskanal 28, der sich durch das zweite Gehäuseteil 16 bis zu dessen stirnseitig begrenzenden Wand 30 erstreckt. In dieser Wand 30 sind mehrere weitere Kanäle eingefräst. Ein erster Kanal, der in den radial inneren Bereich führt, dient als erster Zulaufkanal 32 und mündet in eine erste Einlassöffnung 34, welche nierenförmig ausgebildet ist und in eine in den Figuren 3 und 4 zu erkennende Verdrängerkammer 36 des Verdrängerzählers 14 führt. Axial gegenüberliegend zum Verbindungskanal 28 ist im ersten Gehäuseteil 12 ein zweiter Zulaufkanal 38 ausgebildet. Gemäß Figur 2 erstreckt sich vom Ende des Verbindungskanals 28 zunächst nach radial außen, daraufhin nach unten und anschließend in das zweite Gehäuseteil 16 axial hinein ein erster Abschnitt einer Umgehungsleitung 42, der in eine Messkammer 44 des Druckdifferenzaufnehmers 18 führt. Ein dem ersten Abschnitt entsprechender zweiter Abschnitt der Umgehungsleitung 42 erstreckt sich an der radial gegenüberliegenden Seite des zweiten Gehäuseteils 16 von der im Vergleich zum ersten Abschnitt der Umgehungsleitung 42 entgegengesetzten Seite eines in der Messkammer 44 angeordneten Kolbens aus der Messkammer 44 in Richtung des Auslasses 22. Der Kolben weist das gleiche spezifische Gewicht wie das Messfluid, also wie der Kraftstoff, auf und ist wie die Messkammer 44 zylindrisch geformt; die Messkammer 44 weist somit einen Innendurchmesser auf, der im Wesentlichen dem Außendurchmesser des Kolbens entspricht.

Aus der Verdrängerkammer 36 kann Kraftstoff in eine erste nierenförmige Auslassöffnung 46 strömen, welche wiederum in einen ersten Ablaufkanal 48 mündet, der über einen sich durch das zweite Gehäuseteil 16 erstreckenden zweiten Verbindungskanal 50 mit dem Auslass 22 fluidisch verbunden ist. Dieser als Ablauf dienende Verbindungskanal 50 ist auch fluidisch mit einem im ersten Gehäuseteil 12 ausgebildeten und dem Verbindungskanal 50 gegenüberliegenden zweiten Ablaufkanal 52 verbunden. Zusätzlich ist an der stirnseitigen Wand 30 eine Axialnut 54 ausgebildet, die die im zweiten Gehäuseteil 16 ausgebildeten Kanäle umgibt und die zur Aufnahme einer nicht dargestellten Dichtung dient, die gegen das erste Gehäuseteil 12 nach der Montage anliegt, so dass eine dichte Verbindung der beiden Gehäuseteile 12, 16 hergestellt wird.

In der Figur 3 ist das erste Gehäuseteil 12 in einer Ansicht auf eine Anlagefläche 56 dargestellt, mit der das erste Gehäuseteil 12 gegen die die Verdrängerkammer 36 stirnseitig begrenzende Wand 30 des zweiten Gehäuseteils 16 anliegt. Im ersten Gehäuseteil 12 ist eine Aufnahmeöffnung 58 ausgebildet, in die eine Antriebswelle 60 des Antriebsmotors des Verdrängerzählers 14 ragt. In diese Aufnahmeöffnung 58 wird eine Buchse 62 eingesetzt, die als Verdrängerkammer 36 dient und entsprechend ein als antreibbares Verdrängerrad 64 dienendes Innenzahnrad sowie ein Außenzahnrad 66 des Verdrängerzählers 14 aufnimmt. Die im Wesentlichen topfförmig ausgeführte Buchse 62 weist entsprechend an ihrer rückseitig die Verdrängerkammer 36 begrenzenden Wand 68 eine Durchgangsbohrung 70 auf, durch die die Antriebswelle 60 in die Verdrängerkammer 36 ragt.

An ihrer radial begrenzenden Außenwand 72 sind am Außenumfang zwei Nuten 74 ausgebildet, welche als Abschnitt des zweiten Zulaufkanals 38 und des zweiten Ablaufkanals 52 dienen und die stirnseitig in die Verbindungskanäle 28, 50 beziehungsweise den ersten Zulaufkanal 32 und den ersten Ablaufkanal 48 des zweiten Gehäuseteils 16 münden. Diese Nuten 74 werden radial durch eine Innenwand 76 der Aufnahmeöffnung 58 verschlossen. An der zum zweiten Gehäuseteil 16 entgegengesetzten Seite münden die beiden Nuten 74 jeweils in eine Querbohrung 78, die in der rückseitig begrenzenden Wand 68 der Buchse 62 ausgebildet sind und deren zur jeweiligen Nut 74 entgegengesetzte Enden in eine zweite Einlassöffnung 80 beziehungsweise eine zweite Auslassöffnung 82 zur Verdrängerkammer 36 münden. Diese zweite Einlassöffnung 80 ist ebenso wie die zweite Auslassöffnung 82 nierenförmig ausgebildet, wobei die zweite Einlassöffnung 80 bezüglich eines Querschnitts senkrecht zur Drehachse der Zahnräder 64, 66 spiegelbildlich zur stirnseitigen ersten Einlassöffnung 34 und die zweite Auslassöffnung 82 spiegelbildlich zur ersten Auslassöffnung 46 angeordnet ist.

In der Figur 4 ist die Buchse 62 mit dem als antreibbaren Verdrängerrad dienenden Innenzahnrad 64 und dem radial in der Buchse 62 gelagerten Außenzahnrad 66 dargestellt. Die nierenförmigen ersten und zweiten Einlassöffnungen 34, 80 sowie die nierenförmigen ersten und zweiten Auslassöffnungen 46, 82 erstrecken sich mit ihren äußeren Umfängen so weit in Richtung der radial begrenzenden Außenwand 72 der Buchse 62, dass sie möglichst exakt an Zahngründen 84 des Außenzahnrades 66 münden.

Im Betrieb der Vorrichtung zur Messung von Durchflussvorgängen gelangt nun Kraftstoff über eine Hochdruckpumpe und ein oder mehrere Einspritzventile zum Einlass 20 und strömt weiter über den als Zulauf dienenden Verbindungskanal 28 zu den beiden Zulaufkanälen 32, 38 und über die Einlassöffnungen 34, 80 in die Verdrängerkammer 36, welche somit sowohl stirnseitig als auch rückseitig befüllt wird. Nach der Förderung durch die Drehung des angetriebenen Verdrängerrades 64 verlässt der Kraftstoff die Verdrängerkammer 36 wieder über die beiden Auslassöffnungen 46, 82 und strömt über die Ablaufkanäle 48, 52 zurück zum als Ablauf dienenden Verbindungskanal 50, um die Vorrichtung anschließend wieder über den Auslass 22 zu verlassen.

Durch die Förderung des Kraftstoffs mittels des Verdrängerzählers 14 sowie durch das Einspritzen des Kraftstoffs in den Einlass 20 und durch die fluidische Verbindung des Einlasses zu einer ersten Seite des Kolbens sowie des Auslasses zur gegenüberliegenden Seite des Kolbens über die Umgehungsleitung, kann eine Druckdifferenz zwischen der Frontseite und der Rückseite des Kolbens entstehen, die zu einer Auslenkung des Kolbens aus seiner Ruhestellung führt. Entsprechend ist die Auslenkung des Kolbens ein Maß für die anliegende Druckdifferenz. An der Messkammer 44 ist daher ein Wegsensor angeordnet, der in Wirkverbindung mit dem Kolben steht und in dem durch die Auslenkung des Kolbens eine von der Größe der Auslenkung abhängige Spannung erzeugt wird. Dieser an der Messkammer 44 befestigte Wegsensor ist insbesondere ein magnetoresistiver Sensor, über den die auf ihn wirkende Feldstärke eines Magneten in eine Spannung umgewandelt wird. Als Wegsensoren können auch Lichtsensoren eingesetzt werden.

Der Wegsensor ist mit der Auswerte- und Steuereinheit 24 verbunden, welche die Werte dieses Wegsensors aufnimmt und entsprechende Steuersignale dem Antriebsmotor übermittelt, der möglichst derart angesteuert wird, dass sich der Kolben immer in einer definierten Ausgangsstellung befindet. Der rotatorische Verdrängerzähler 14 wird also derart angetrieben, dass er die aufgrund des eingespritzten Fluides am Kolben entstehende Druckdifferenz durch Förderung ständig etwa ausgleicht. In der Messkammer 44 sind des Weiteren ein Drucksensor sowie ein Temperatursensor angeordnet, die kontinuierlich die in diesem Bereich auftretenden Drücke und Temperaturen messen und wiederum der Auswerte- und Steuereinheit 24 zuführen, um Änderungen der Dichte bei der Berechnung berücksichtigen zu können.

Der Ablauf der Messungen erfolgt derart, dass bei der Berechnung eines zu ermittelnden Gesamtdurchflusses in der Auswerte- und Steuereinheit 24 sowohl ein durch die Bewegung beziehungsweise Stellung des Kolbens und das damit verdrängte Volumen in der Messkammer 44 entstehender Durchfluss in der Umgehungsleitung 42 als auch ein tatsächlicher Durchfluss der Zahnradpumpe 14 in einem festgelegten Zeitintervall berücksichtigt werden und beide Durchflüsse zur Ermittlung des Gesamtdurchflusses miteinander addiert werden.

Die Ermittlung des Durchflusses am Kolben erfolgt beispielsweise, indem in der Auswerte- und Steuereinheit, die mit dem Wegsensor verbunden ist, die Auslenkung des Kolbens differenziert wird und anschließend mit der Grundfläche des Kolbens multipliziert wird, so dass sich ein Volumenstrom in der Umgehungsleitung 42 in diesem Zeitintervall ergibt.

Der Durchfluss durch den Verdrängerzähler 14 kann entweder aus den ermittelten Steuerdaten bestimmt werden oder über die Drehzahl berechnet werden, wenn diese direkt am Verdrängerzähler 14 oder am Antriebsmotor beispielsweise über optische Kodierer oder magnetoresistive Sensoren gemessen wird.

Bei dieser erfindungsgemäßen Vorrichtung wurde festgestellt, dass sich bei einem Durchfluss von etwa 301/h der Kraftstoffstrom aufgrund der etwas unterschiedlichen Strömungswiderstände so aufteilt, dass hauptsächlich ein Einströmen und Fördern im stirnseitigen Bereich stattfindet. Aufgrund der relativ geringen Druckdifferenzen bei dieser Fördermenge besteht jedoch auch ein relativ geringes Risiko einer auftretenden Kavitation. Wird nun der Durchfluss des Verdrängerzählers 14 aufgrund höherer Einspritzmengen auf beispielsweise etwa 70l/h erhöht, findet eine wachsende Befüllung und Förderung auch über die Rückseite des Verdrängerzählers 14 statt, über die dann etwa 40% des Durchflusses strömen. Entsprechend werden die die Kavitation bewirkenden Dampfhohlräume im Kraftstoff ebenfalls gleichmäßiger über die axiale Länge des Verdrängerrades 64 aufgeteilt und wachsen nicht im Bereich der Stirnseite an. Somit wird auftretende Kavitation über die Verdrängerkammer 36 gleichmäßiger verteilt und es sinkt auch die Neigung zur Kavitation.

Entsprechend nimmt bei dieser erfindungsgemäßen Vorrichtung zur Messung von Durchflussvorgängen von Fluiden der Kavitationsfraß in der Verdrängerkammer 36 und am Verdrängerrad 64 deutlich ab und der Verdrängerzähler 14 bleibt somit deutlich länger haltbar. Damit steigt auch die Exaktheit der Messergebnisse, da jeder Umdrehung des Verdrängerzählers 14 ein Volumenstrom zugeordnet werden muss, welcher sich bei zu starkem Verschleiß aufgrund zusätzlicher Hohlräume im Laufe des Betriebs ändern würde. Ein weiterer Vorteil ergibt sich durch die Austauschbarkeit und freie Materialwahl der Buchse.

Es sollte deutlich sein, dass die Erfindung nicht auf das beschriebene Ausführungsbeispiel begrenzt ist, sondern verschiedene Modifikationen innerhalb des Schutzbereichs des Hauptanspruchs möglich sind. So lässt sich die Anordnung der Kanäle und der Gehäuseteilungen ebenso ändern wie die Ausführung des Verdrängerzählers, der beispielsweise auch als Doppelzahnradpumpe oder Flügelzellenpumpe ausgeführt werden kann. Auch kann statt der Buchse der Verdrängerzähler direkt in der Ausnehmung angeordnet werden oder die Buchse ohne eigene Rückwand ausgeführt werden. Nicht zuletzt wird eine verbesserte Aufteilung der Zuströmung in die Verdrängerkammer auch bereits dadurch erreicht, dass lediglich zwei Zulauföffnungen an den beiden axial begrenzenden Seiten der Verdrängerkammer ausgebildet werden.

## Patentansprüche

1. Vorrichtung zur Messung von Durchflussvorgängen von Fluiden mit einem Einlass (20),
einem Auslass (22),
einem antreibbaren Verdrängerzähler (14), der in einem Gehäuse (10) angeordnet ist, in dem eine Verdrängerkammer (36) ausgebildet ist, in der zumindest ein angetriebenes Verdrängerrad (64) drehbar angeordnet ist, wobei die Verdrängerkammer (36) über einen ersten Zulaufkanal (32) mit dem Einlass (20) und über einen ersten Ablaufkanal (48) mit dem Auslass (22) fluidisch verbunden ist,
einer Umgehungsleitung (42), über die der Verdrängerzähler (14) umgehbar ist,
einem Druckdifferenzaufnehmer (18), der in der Umgehungsleitung (42) angeordnet ist,
und einer Auswerte- und Steuereinheit (24), über die der antreibbare Verdrängerzähler (14) in Abhängigkeit der am Druckdifferenzaufnehmer (18) anliegenden Druckdifferenz regelbar ist,
**dadurch gekennzeichnet, dass**
der erste Zulaufkanal (32) über eine erste Einlassöffnung (34) stirnseitig in die Verdrängerkammer (36) mündet und ein zweiter mit dem Einlass (20) fluidisch verbundener Zulaufkanal (38) über eine zweite Einlassöffnung (80) rückseitig in die Verdrängerkammer (36) mündet.

2. Vorrichtung zur Messung von Durchflussvorgängen von Fluiden nach Anspruch 1,
**dadurch gekennzeichnet, dass**
der erste Ablaufkanal (48) stirnseitig über eine erste Auslassöffnung (46) in die Verdrängerkammer (36) mündet und ein zweiter Ablaufkanal (52) rückseitig über eine zweite Auslassöffnung (82) in die Verdrängerkammer (36) mündet.

3. Vorrichtung zur Messung von Durchflussvorgängen von Fluiden nach einem der Ansprüche 1 oder 2,
**dadurch gekennzeichnet, dass**
das Gehäuse (10) zweiteilig ausgeführt ist, wobei im ersten Gehäuseteil (12) die Verdrängerkammer (36) angeordnet ist, welche durch ein zweites Gehäuseteil (16) verschlossen ist, in dem die stirnseitige Einlassöffnung (34) und/oder, wenn rückbezogen auf Anspruch 2, die Auslassöffnung (46)
angeordnet ist und in dem eine Messkammer (44) des Druckdifferenzaufnehmers (18) angeordnet ist.

4. Vorrichtung zur Messung von Durchflussvorgängen von Fluiden nach einem der vorhergehenden Ansprüche,
**dadurch gekennzeichnet, dass**
die Einlassöffnungen (34, 80) und/oder, wenn rückbezogen auf Anspruch 2, die Auslassöffnungen (46, 82) stirnseitig und rückseitig des die Verdrängerkammer (36) begrenzenden Gehäuses (10) nierenförmig ausgebildet sind.

5. Vorrichtung zur Messung von Durchflussvorgängen von Fluiden nach Anspruch 4,
**dadurch gekennzeichnet, dass**
der Verdrängerzähler (14) als Zahnradpumpe ausgebildet ist und sich die nierenförmigen Einlassöffnungen (34, 80) und/oder Auslassöffnungen (46, 82) radial nach außen bis zu den Zahngründen (84) des Verdrängerrades (64) erstecken.

6. Vorrichtung zur Messung von Durchflussvorgängen von Fluiden nach einem der vorhergehenden Ansprüche,
**dadurch gekennzeichnet, dass**
die Einlassöffnung (34) und/oder, wenn rückbezogen auf Anspruch 2, die Auslassöffnung (46) stirnseitig der Verdrängerkammer (36) spiegelbildlich zur Einlassöffnung (80) und/oder zur Auslassöffnung (82) rückseitig der Verdrängerkammer (36) ausgebildet ist.

7. Vorrichtung zur Messung von Durchflussvorgängen von Fluiden nach einem der vorhergehenden Ansprüche,
**dadurch gekennzeichnet, dass**
der erste Zulaufkanal (32) und der zweite Zulaufkanal (38) und/oder der erste Ablaufkanal (48) und der zweite Ablaufkanal (52) über im Gehäuse (10) angeordnete Verbindungskanäle (28, 50) fluidisch miteinander verbunden sind und beide Zulaufkanäle (32, 38) und/oder beide Ablaufkanäle (48, 52) fluidisch über die Verbindungskanäle (28, 50) mit dem gemeinsamen am Gehäuse (10) ausgebildeten Einlass (20) und/oder Auslass (22) verbunden sind.

8. Vorrichtung zur Messung von Durchflussvorgängen von Fluiden nach einem der vorhergehenden Ansprüchen,
**dadurch gekennzeichnet, dass**
die Einlassöffnungen (34, 80) und/oder, wenn rückbezogen auf Anspruch 2, die Auslassöffnungen (46, 82) in die Verdrängerkammer (36) an stirnseitig und rückseitig die Verdrängerkammer (36) begrenzenden Wänden (30, 68) eingefräst sind.

9. Vorrichtung zur Messung von Durchflussvorgängen von Fluiden nach einem der vorhergehenden Ansprüche 3 bis 8,
**dadurch gekennzeichnet, dass**
im ersten Gehäuseteil (12) eine Buchse (62) angeordnet ist, die die Verdrängerkammer (36) bildet und die in eine entsprechende Aufnahmeöffnung (58) des ersten Gehäuseteils (12) eingesetzt ist.

10. Vorrichtung zur Messung von Durchflussvorgängen von Fluiden nach Anspruch 9,
**dadurch gekennzeichnet, dass**
die Buchse (62) die die Verdrängerkammer (36) rückseitig begrenzende Wand (68) aufweist, in der die zweite Einlassöffnung (80) und/oder die zweite Auslassöffnung (82) ausgebildet sind.

11. Vorrichtung zur Messung von Durchflussvorgängen von Fluiden nach einem der Ansprüche 9 oder 10,
**dadurch gekennzeichnet, dass**
der zweite Zulaufkanal (38) und der zweite Ablaufkanal (52) zumindest teilweise in der die Verdrängerkammer (36) rückseitig begrenzenden Wand (68) und an der radial begrenzenden Außenwand (72) der Buchse (62) ausgebildet sind.

12. Vorrichtung zur Messung von Durchflussvorgängen von Fluiden nach Anspruch 11,
**dadurch gekennzeichnet, dass**
an der radialen Außenseite der radial begrenzenden Außenwand (72) der Buchse (62) Nuten (74) ausgebildet sind, die einen Abschnitt des zweiten Zulaufkanals (38) und des zweiten Ablaufkanals (52) bilden, welche nach radial außen durch das erste Gehäuseteil (12) verschlossen sind.

## Claims

1. Device for measuring flow processes of fluids, comprising
an inlet (20),
an outlet (22),
a drivable positive displacement flow meter (14) arranged in a housing (10) in which a positive displacement chamber (36) is formed, in which at least one driven impeller (64) is rotatably arranged, the positive displacement chamber (36) being fluidically connected to the inlet (20) via a first supply duct (32) and to the outlet (22) via a first discharge duct (48),
a bypass (42) that allows the positive displacement flow meter (14) to be bypassed,
a differential pressure sensor (18) which is placed in the bypass (42),
and an evaluation and control unit (24) that allows the drivable positive displacement flow meter (14) to be controlled in accordance with the differential pressure applied to the differential pressure sensor (18),
**characterized in that**
the first supply duct (32) opens into the positive displacement chamber (36) at the front via a first inlet port (34), and a second supply duct (38) that is fluidically connected to the inlet (20) opens into the positive displacement chamber (36) at the rear via a second inlet port (80).

2. Device for measuring flow processes of fluids of claim 1, **characterized in that** the first discharge duct (48) opens into the positive displacement chamber (36) at the front via a first outlet port (46) and a second discharge duct (52) opens into the positive displacement chamber (36) at the rear via a second outlet port (82).

3. Device for measuring flow processes of fluids of one of claims 1 or 2, **characterized in that** the housing (20) is of a bipartite structure, wherein the positive displacement chamber (36) is arranged in the first housing part (12), the chamber being closed by a second housing part (16) in which the front-face inlet port (34) and/or, if referred to claim 2, the outlet port (46) is arranged and in which a measuring chamber (44) of the differential pressure sensor (18) is arranged.

4. Device for measuring flow processes of fluids of one of the preceding claims, **characterized in that** the inlet ports (34, 80) and/or, if referred to claim 2, the outlet ports (46, 82) are formed kidney-shaped at the front and the rear of the housing part (10) delimiting the positive displacement chamber (36).

5. Device for measuring flow processes of fluids of claim 4, **characterized in that** the positive displacement flow meter (14) is designed as a gear pump and the kidney-shaped inlet ports (34, 80) and/or outlet ports (46, 82) extend radially outward to the tooth roots (84) of the impeller (64).

6. Device for measuring flow processes of fluids of one of the preceding claims, **characterized in that** the inlet port (34) and/or, if referred to claim 2, the outlet port (46) at the front of the positive displacement chamber (36) is formed as a mirror image of the inlet port (80) and/or the outlet port (82) at the rear of the positive displacement chamber (36).

7. Device for measuring flow processes of fluids of one of the preceding claims, **characterized in that** the first supply duct (32) and the second supply duct (38) and/or the first discharge duct (48) and the second discharge duct (52) are fluidically connected with each other via connection ducts (28, 50) arranged in the housing (10) and both supply ducts (32, 38) and/or both discharge ducts (48, 52) are fluidically connected, via the connection ducts (28, 50), with the common inlet (20) and/or outlet (33) formed at the housing (10).

8. Device for measuring flow processes of fluids of one of the preceding claims, **characterized in that** the inlet ports (34, 80) and/or, if referred to claim 2, the outlet ports (46, 82) into the positive displacement chamber (36) are milled into the walls (30, 68) delimiting the positive displacement chamber (36) at the front and the rear.

9. Device for measuring flow processes of fluids of one of the preceding claims 3 to 8, **characterized in that** a sleeve (62) is arranged in the first housing part (12), the sleeve forming the positive displacement chamber (36) and being inserted into a corresponding receiving opening (58) of the first housing part (12).

10. Device for measuring flow processes of fluids of claim 9, **characterized in that** the sleeve (62) comprises the wall (68) that delimits the positive displacement chamber (36) at the rear, in which wall the second inlet port (80) and/or the second outlet port (82) are formed.

11. Device for measuring flow processes of fluids of one of claims 9 or 10, **characterized in that** the second supply duct (38) and the second discharge duct (52) are formed at least in part in the wall (68) that delimits the positive displacement chamber (36) at the rear and in the radially delimiting outer wall (72) of the sleeve (62).

12. Device for measuring flow processes of fluids of claim 11, **characterized in that** grooves (74) are formed in the radial outer side of the radially delimiting outer wall (72) of the sleeve (62), which form a section of the second supply duct (38) and of the second discharge duct (52), respectively, which are closed to the radial outer side by the first housing part (12).

## Revendications

1. Dispositif de mesure des processus d'écoulement de fluides comprenant
une entrée (20),
une sortie (22),
un compteur de déplacement pouvant être entraîné (14), qui est disposé dans un carter (10) dans lequel est formée une chambre de déplacement (36), dans laquelle au moins une roue à déplacement (64) entraînée est disposée de manière rotative, la chambre de déplacement (36) étant reliée de manière fluidique à l'entrée (20) par un premier canal d'entrée (32) et à la sortie (22) par un premier canal de sortie (48),
une conduite de dérivation (42) par laquelle le compteur de déplacement positif (14) peut être contourné,
un capteur de différence de pression (189, qui est disposé dans la conduite de dérivation (42)
et une unité d'évaluation et de commande (24) par l'intermédiaire de laquelle le compteur de déplacement (14) entraînable peut être réglé en fonction de la différence de pression présente au capteur de différence de pression (18),
**caractérisé en ce que**
le premier canal d'entrée (32) s'ouvre, par une première ouverture d'entrée (34), dans la chambre de déplacement (36), côté de front, et un second canal d'entrée (38) relié fluidiquement à l'entrée (20) s'ouvre, côté arrière, dans la chambre de déplacement (36) par une deuxième ouverture d'entrée (80)..

2. Dispositif de mesure des processus d'écoulement de fluides comprenant selon la revendication 1, **caractérisé en ce que** le premier canal de sortie (48) s'ouvre dans la chambre de déplacement (36) par une première ouverture de sortie (46), et un deuxième canal de sortie (52) s'ouvre à l'arrière dans la chambre de déplacement (36) par un deuxième orifice de sortie (82).

3. Dispositif de mesure de processus d'écoulement de fluides selon l'une des revendications 1 ou 2, **caractérisé en ce que** le carter (10) est conçu en deux parties, la chambre de déplacement (36) étant disposée dans une première partie (12) du carter, la chambre étant fermée par une deuxième partie de carter, dans laquelle sont agencées l'ouverture d'entrée (34), côté de front, et/ ou, si référé à la revendication 2, l'orifice de sortie (46), et dans laquelle est disposée une chambre de mesure (44) du capteur de différence de pression (18).

4. Dispositif de mesure de processus d'écoulement de fluides selon l'une des revendications précédentes, **caractérisé en ce que** les ouvertures d'entrée (34, 80) et/ou, si référé à la revendication 2, les ouvertures de sortie (46, 82) sont formées en forme de rein, côtés de front et d'arrière du carter (10) délimitant la chambre de déplacement (36).

5. Dispositif pour mesurer des processus d'écoulement de fluides selon la revendication 4, **caractérisé en ce que** le compteur de déplacement positif (14) est réalisé comme une pompe à engrenages, et que les ouvertures d'entrée (34, 80) et/ou de sortie (46, 82) en forme de rein s'étendent radialement vers l'extérieur jusqu'aux fonds des dents (84) du roue de déplacement (64).

6. Dispositif pour mesurer des processus d'écoulement de fluides selon l'une des revendications précédentes, **caractérisé en ce que** l'ouverture d'entrée (34) et/ou, si référée à la revendication 2, l'ouverture de sortie (46) sont formées en face de la chambre de déplacement (36) à l'image de l'ouverture d'entrée (80) et/ou de l'ouverture de sortie (82) à l'arrière de la chambre de déplacement (36).

7. Dispositif de mesure de flux de fluides selon l'une des revendications précédentes, **caractérisé en ce que** le premier canal d'entrée (32) et le deuxième canal d'entrée (38) et/ou le premier canal de sortie (48) et le deuxième canal de sortie (52) sont en liaison fluidique par des canaux de liaison (28, 50) disposés dans le carter (10) et les deux canaux d'entrée (32, 38) et/ou les deux canaux d'écoulement (48, 52) sont, par les canaux de liaison (28, 50), en liaison fluidique avec l'entrée (20) et/ou la sortie (22) commune formées sur le carter (10).

8. Dispositif de mesure de processus d'écoulement de fluides selon l'une des revendications précédentes, **caractérisé en ce que** les ouvertures d'entrée (34, 80) et/ou, si référée à la revendication 2, les ouvertures de sortie (46, 82) sont usinées dans les parois (30, 68) délimitent la chambre de déplacement (36) à l'avant et à l'arrière.

9. Dispositif de mesure de processus d'écoulement de fluides selon l'une des revendications précédentes 3 à 8, **caractérisé en ce que** dans la première partie de carter (12), une douille (62) est disposée, qui forme la chambre de déplacement (36) et qui est insérée dans une ouverture de logement correspondante (58) de la première partie de carter (12).

10. Dispositif de dosage de débit de fluide selon la revendication 9, **caractérisé en ce que** la douille (62) comprend la paroi (68) délimitant la chambre de déplacement (36) à l'arrière, dans laquelle la deuxième ouverture d'entrée (80) et/ou la deuxième ouverture de sortie (82) sont formées.

11. Dispositif de mesure de processus d'écoulement de fluides selon l'une des revendications 9 ou 10, **caractérisé en ce que** le deuxième canal d'entrée (38) et le deuxième canal de sortie (52) sont formés au moins partiellement dans la paroi (68) délimitant, côté arrière, la chambre de déplacement (36) et à la paroi extérieure (72) délimitant radialement de la douille (62).

12. Dispositif pour mesurer des processus d'écoulement de fluides selon la revendication 11, **caractérisé en ce que** sur le côté extérieur radial de la paroi extérieure délimitant radialement (72) de la douille (62), des rainures (74) sont formées, qui forment une section du deuxième canal d'entrée (38) et du deuxième canal de sortie (52), qui sont fermées radialement vers l'extérieur par la première partie de carter (12).
